# EUROPÄISCHE PATENTSCHRIFT

(11) **EP 2 565 829 B1**
(45) Veröffentlichungstag und Bekanntmachung des Hinweises auf die Patenterteilung: **26.04.2017**
(21) Anmeldenummer: 12007464.6
(22) Anmeldetag: 14.02.2007
(51) Int. Cl.: G06K 19/073, G06K 19/077

(54) **Sicherheits- und/oder Wertdokument**
Security and/or valuable document
Document de sécurité et/ou de valeur

(30) Priorität: 21.02.2006 DE 102006008345
(43) Veröffentlichungstag der Anmeldung: 06.03.2013
(62) Teilanmeldung aus: 07721930.1
(73) Patentinhaber: Bundesdruckerei GmbH, 10958 Berlin (DE)
(72) Erfinder: Kuhn, Christian, D-10958 Berlin (DE)
(74) Vertreter: Jungblut, Bernhard Jakob

(56) Entgegenhaltungen:
- DE-A1- 19 805 282

## Beschreibung

### Gebiet der Erfindung

Die Erfindung betrifft ein Sicherheits- und/oder Wertdokument mit einer elektronischen Transponderschaltung, wobei die Transponderschaltung mit einer vorzugsweise aber nicht notwendigerweise flächigen Transponderantenne elektrisch verbunden ist, sowie ein Verfahren zur Herstellung eines solchen Dokumentes. Als Sicherheits- und/oder Wertdokumente kommen insbesondere in Frage: Personalausweise, Reisepässe, Banknoten, Schecks, Führerscheine sowie Postwertzeichen.

Hintergrund der Erfindung und Stand der Technik.

Sicherheits- und/oder Wertdokumente des eingangs genannten Aufbaus sind aus der Praxis bekannt. Hierbei handelt es sich beispielsweise um Reisepässe, in welche ein die elektronische Transponderschaltung bildender Chip einlaminiert ist, der einerseits einen Speicher zur Speicherung von Daten und andererseits eine mit dem Speicher verbundene Steuerschaltung aufweist, die den Empfang von eine Speicherauslesung initialisierenden Signalen sowie die Sendung von Signalen, die Daten enthalten, steuert. Typischerweise sind solche Transponderschaltungen in der üblichen Siliziumtechnologie ausgebildet. Die Transponderschaltung ist wiederum mit einer einlaminierten Drahtantenne aus einem metallischen Werkstoff verbunden, welche als Empfangselement für die Speicherauslesung initialisierende Signal, als Empfangselement für die Betriebsenergie der Transponderschaltung vermittelnde elektromagnetische Strahlung, und als Sendeelement zur Aussendung von Signalen mit Daten, dient. Mit anderen Worten ausgedrückt, die Drahtantenne ist Sende- und Empfangsantenne für Signale, sowie im Falle passiver Transponder Empfangselement für Energie übertragende Strahlung.

Die vorstehende Technologie hat sich zum Auslesen von Daten aus Sicherheits- und/oder Wertdokumenten und elektronischer Überprüfung der Daten durch Datenabgleich, beispielsweise mit den Daten eines Servers, gut bewährt. Bei einfachen Anwendungen, beispielsweise der simplen Auslesung der Daten ohne weitere Vorort-Hardware zur Evaluierung oder Anzeige der Daten (beispielsweise wenn lediglich die Passage einer einen Pass mit führenden Person registriert werden soll), hat jedoch eine das Dokument an eine Transponderauslesevorrichtung haltende Bedienperson keine unmittelbare und einfache Kontrolle, ob tatsächlich eine Auslesung der Transponderschaltung erfolgreich erfolgt ist. Auch ist es mitunter vorgesehen, dass nach Auslesen des Transponders an einer ersten Kontrollstelle eine zweite Kontrollstelle subsequent passiert werden muss, wobei es wünschenswert wäre, dass an der zweiten Kontrollstelle ohne weiteren apparativen Aufwand anhand des Dokumentes erkennbar ist, ob bei der ersten Kontrollstelle eine ordnungsgemäße Auslesung der Transponderschaltung erfolgt ist. Schließlich ist es wünschenswert, dass ein Träger des Dokumentes erkennen kann, ob vor kurzem eine Auslesung erfolgte, insbesondere auch zur Erkennung eventueller unberechtigter Ausleseversuche.

Nächstliegender Stand der Technik DE 198 05 282 A1 betrifft ein Wertdokument, mit einer Energieversorgung, beispielsweise einer induktiv eingekoppelten Spule und einer Elektrolumineszenzeinrichtung zur Anzeige des Betriebszustandes. Des Weiteren ist die bisherige Technologie des Einlaminierens der Transponderantenne aufwändig.

Technisches Problem der Erfindung.

Der Erfindung liegt daher das technische Problem zu Grunde, ein Sicherheits- und/oder Wertdokument anzugeben, welches eine versuchte und/oder vollendete Auslesung der Transponderschaltung einem Träger bzw. Inhaber des Dokumentes oder einer das Dokument überprüfenden anderen Person anzeigt. Der Erfindung liegt das weitere technische Problem zu Grunde, Mittel zur Herstellung eines Sicherheits- und Wertdokumentes anzugeben, welche zudem vergleichsweise einfach ausführbar sind.

Grundzüge der Erfindung und bevorzugte Ausführungsformen.

Zur Lösung des erstgenannten technischen Problems lehrt die Erfindung ein Sicherheits- und/oder Wertdokument nach Anspruch 1, mit einer elektronischen Transponderschaltung, wobei die Transponderschaltung mit einer Transponderantenne verbunden ist, wobei die Transponderantenne und/oder die Transponderschaltung mit Mitteln zur Anzeige einer Aktivierung der Transponderantenne verbunden ist, welche ein optisches, akustisches oder mechanisches Signal bei oder nach Aktivierung der Transponderantenne erzeugen.

Der Begriff der Anzeige ist hierbei in aller Allgemeinheit zu verstehen und umfasst die Erzeugung eines beliebigen Signals, das von einer Person ggf. mit, vorzugsweise jedoch ohne technische Hilfsmittel wahrnehmbar ist. Als Signale kommen insbesondere optische Signale, akustische Signale und fühlbare mechanische Signale, wie Verbiegung oder Vibration des Dokuments, in Frage. Es kann auch eine Kombination solcher Signale eingerichtet sein.

Vorzugsweise weisen die Mittel zur Anzeige einer Aktivierung der Transponderantenne eine Relaxationszeit auf. Hiermit ist gemeint, dass das Signal nicht nur während der Aktivierung der Transponderantenne erzeugt wird, sondern auch für einen definierten Zeitraum nach Aktivierung und folgender Deaktivierung der Transponderantenne anhält. Es versteht sich dabei, dass die Signalemission reversibel ist, i.e. kein dauerhaftes Signal mit einer einzigen Aktivierung der Transponderantenne erzeugt wird. Als Relaxationszeiten kommen Zeiten im Bereich von 0,1 s bis 1 Tag, vorzugsweise 1 s bis 10 h, höchstvorzusgweise 1 s bis 1 h, insbesondere 1 s bis 10 min., in Frage. Dadurch ist eine Steuerung der Mittel zur Anzeige der Aktivierung der Transponderantenne nicht zwingend erforderlich, da das Signal gleichsam selbstverlöschend ist. Es versteht sich, dass jedoch auch eine zeitabhängige Steuerung der Anzeigemittel durch die Transponderschaltung von der Erfindung umfasst ist, wobei die Relaxationszeit dann in der Transponderschaltung programmiert ist.

Mit der Erfindung wird erreicht, dass ein Träger bzw. Inhaber des Dokumentes und/oder eine das Dokument kontrollierende andere Person erkennen kann, ob eine Auslesung des Transponders versucht wurde. Dabei ist es unerheblich, ob die Auslesung auch tatsächlich erfolgreich durchgeführt wurde, da die Mittel zur Anzeige einer Aktivierung der Transponderantenne unabhängig von der erfolgreichen Datenübertragung ein Signal stets dann erzeugen, wenn die Transponderantenne durch eine Abfrage oder auch nur einen Abfrageversuch aktiviert worden ist. Der Träger des Dokumentes kann auf diese Weise beispielsweise einen unauthorisierten Versuch einer Auslesung des Transponders feststellen. Eine Kontrollperson kann auf einfache Weise feststellen, ob bei einer zuvor durchlaufenen Kontrollstation überhaupt ein Abfrageversuch durchgeführt wurde, i.e. ob die zuvor durchlaufene Kontrollstation ordnungsgemäß durchlaufen wurde. Hierbei braucht die Kontrollperson nicht feststellen zu können, ob die Abfrage an der Kontrollstation erfolgreich war, da bei Mißerfolg der Träger des Dokumentes bereits bei der Kontrollstation zur weiteren Klärung aufgehalten werden wird.

Im Rahmen der Erfindung kann vorgesehen sein, dass die Transponderantenne und/oder die Transponderschaltung mit optischen Anzeigemitteln verbunden ist, deren optische Eigenschaften sich bei Aktivierung der Transponderantenne reversibel verändern.

Grundsätzlich können diese optischen Anzeigemittel elektrisch mit der Transponderschaltung oder der Transponderantenne verbunden sein, wobei die Veränderung der optischen Eigenschaften dann durch Anlegung einer elektrischen Spannung bzw. Potentialdifferenz an die optischen Anzeigemittel erfolgt. Alternativ können die optischen Anzeigemittel aber auch durch den Empfang der von der Transponderantenne ausgesandten elektromagnetischen Strahlung oder durch Wärme aktiviert werden.

Die Veränderung der optischen Eigenschaften umfasst: Veränderung der Farbe im Sichtbaren, Veränderung der Transmission und/oder Reflektion im UV-, sichtbaren, oder IR-Bereich, Veränderung der Polarisation, Emission von Licht im UV-, sichtbaren, oder IR-Bereich, beispielsweise durch Elektrolumineszenz oder Photolumineszenz, wobei die vorstehenden Veränderungen zusätzlich abhängig sein können von einer Co-Aktivierung, beispielsweise durch Einstrahlung von Licht, beispielsweise UV Licht.

Der Begriff der reversiblen Änderung bedeutet, dass die optischen Eigenschaften sich mit der Aktivierung der Transponderantenne sich von einem Ruhezustand zu einem hinsichtlich der optischen Eigenschaften hiervon verschiedenen Aktivierungszustand verändern, jedoch nach Deaktivierung der Transponderantenne sich wieder der Ruhezustand einstellt, ggf. mit der vorstehend angesprochenen Relaxationszeit.

Neben einer einfachen optischen Anzeige der vorstehenden Art kann aber auch ein elektrisch ansteuerbares Display, beispielsweise TFT oder auf Basis bistabiler elektrophoretischer Displays (erhältlich von der Firma E-Ink, USA), eingerichtet sein. Hierbei ist es weiterhin möglich, dass der Zeitpunkt der letzten versuchten oder erfolgten Auslesung des Transponders angezeigt wird. Hierzu ist es erforderlich, dass im Rahmen der Transponderschaltung eine Systemuhr eingerichtet ist, und der Stand der Systemuhr bei versuchter oder erfolgter Auslesung des Transponders ausgelesen und im Display zur Anzeige gebracht wird. Der Begriff des Zeitpunktes umfasst neben der Uhrzeit ggf. auch das Datum.

Ein akustisches oder mechanisches Signal kann beispielsweise mit Hilfe eine piezoelektrischen Signalgebers auf Polymerbasis erzeugt werden. Hierbei können insbesondere auch druckbare Polymerfilme eingesetzt werden. In Frage kommen PVDF (Polyvinylidene Fluoride) Filme mit einer Dicke von bis zu 120 µm, typischerweise im Bereich von 20 - 60 µm, die durch Drucken mit hochauflösenden Druckverfahren, wie Tintenstrahldruck und Mikroprägedruck, unter Einsatz einer Lösung des Polymers als Tinte auf bzw. in dem Dokument anbringbar sind. Hierbei ist auch von Vorteil, dass erhaltene Filme flexibel sind. Solche Verfahren sind beispielsweise von der University of Pennsylvania, USA, bekannt, wobei gemusterte Filme (0,1 µm) hergestellt werden können. Die Gruppe der PVDF Polymere umfasst P(VDF-TrFE) (TrFe = trifluoroethylene) copolymere und elektrostrictive Terpolymere, wie P(VDF-TrFE-CFE) (CFE = chlorofluoroethylene) Copolymere. Im Falle der akustischen oder mechanischen Signale wird in der Regel eine elektrische Ansteuerung durch die Transponderschaltung, ggf. mit der vorstehenden Relaxationszeit, erfolgen. Mittels solcher akustischer oder mechanischen Signale können auch sehbehinderte oder blinde Personen eine versuchte oder erfolgte Auslesung des Transponders feststellen.

Das zweite technische Problem wird in bevorzugter Ausbildung der Erfindung dadurch gelöst, dass die Transponderantenne, ggf. elektrische Verbindungen zwischen Transponderschaltung und Transponderantenne und/oder zwischen Transponderschaltung und Anzeigemittel, und/oder das Anzeigemittel als Druckschichten ausgebildet sind. Hierbei kann die Transponderantenne und/oder das Anzeigemittel und/oder die Verbindungen mittels einer Tinte geschaffen werden, welche elektrisch leitende oder halbleitende Partikel und/oder filmbildende Polymere, wie folgend beschrieben, enthält.

In einer Variante sind die optischen Anzeigemittel durch eine Anzeigedruckschicht gebildet, wobei die Tinte elektrochromische oder thermochromische Materialien, insbesondere Polymere, enthält oder eine OLED (Organic Light Emitting Diode) bildet. Hierbei erfolgt eine Ansteuerung durch die Transponderschaltung. Solche Materialien bzw. Polymere sind dem Fachmann bekannt. Lediglich beispielsweise wird im Zusammenhang mit elektrochromischen Materialien auf cPLC (cholesteric Polymer Liquid Crystal), PDLC (Polymer Dispersed Liquid Crystal), erhältlich von den Firmen E-ink oder Gyricon, und PEDOT:PSS (Firma Acreo) verwiesen. Displays mit letzterem Material kommen mit einer Aktivierungsspannung kleiner 5 V, bis zu 0,6 V, aus. Die Relaxationszeit reicht von ca. 1 Minute bis zu 5 Stunden und mehr. Die erforderliche Energie für ein Schaltspiel (1 cm² Displayfläche) liegt unter 1 mJ. Dieses Material bzw. eine das Material enthaltende Tinte läßt sich z.B. durch Tintenstrahldruck, Siebdruck oder Offsetdruck zu einem Display verarbeiten. Bei den elektrophoretisch arbeitenden Systemen, wie beispielsweise von der Firma E-ink, wie auf die Literaturstellen J. Jacobson et al., IBM Systems Journal 36:457-463 (1997) (sogenannte elektronische Tinte), B. Comiskey et al., Nature 394:253-255 (1998), WO 98/03896, WO98/19208, WO 98/41899, WO 98/41898 oder EP 1105733 A, verwiesen. Im Zusammenhang mit thermochromischen Materialien bzw. solche Materialien enthaltenden Tinten sind wird auf Produkte der Firma VTT, Finnland verwiesen. Die Ansteuerung bzw. Signalerzeugung erfolgt mittels eines Heizers, beispielsweise eines PANI-T Heizers. Beispiele für Materialien zur Herstellung einer OLED sind PPV (poly-p-phenylene vinylene) Copolymere, welche bei Stromfluss Gelb-Grün leuchten. Ergänzend wird auf die Literaturstelle US 2005/0196775 A1 sowie die darin genannten Literaturstellen verweisen. Des weiteren wird auf Produkte der Firmen Cambridge Display Technology, LG Chemicals, Samsung, und PolyLED bzw. OTB Displays verwiesen. Die Betriebsspannungen dieser Produkte liegen unter 5V teilweise nur 3,3 V bis zu 1,8 V und weniger. Zur Ansteuerung reichen Stromstärken von 10 mA und weniger aus. Tinten der letztgenannten Firma können mittels Tintenstrahldruck zu OLEDs verarbeitet werden.

Grundsätzlich sind aber auch alle anderen optischen Anzeigetechnologien, wie TFT Displays einsetzbar. Auch kann eine Schicht mit UV-Pigmenten eingesetzt werden. Diese emittieren Licht bei Anlegung eines elektrischen Stromes.

Schließlich ist es möglich, Anzeigemittel einzusetzen, deren optische Zustandsänderungen erst unter Bestrahlung effektiv wird. Z.B. organische Halbleiterpolymere, die unter UV-Bestrahlung die Farbe von einem leichten Braun zu hellem Blau ändern und im Übrigen unter der Bestrahlung für IR transparent werden, sind von der Firma Optodot Corp (MA, USA) erhältlich.

Auch organische Halbleiter auf Polythiophene-Basis zeigen optische Effekte unter UV-Bestrahlung (erhältlich von Dow Chemicals oder Merck). Solche Materialien können dahingehend modifiziert sein, dass die Änderung unter Bestrahlung nur dann eintritt, wenn gleichzeitig ein Stromfluss durch den Polymerhalbleiter (ab 50 µA) stattfindet.

Gemäß der Erfindung ist die Transponderantenne, wie bereits erwähnt, als Antennendruckschicht mit elektrisch leitenden Pigmentpartikeln ausgebildet. Entsprechendes gilt für elektrische Zuleitungen zu den Anzeigemitteln. Dann kann die Transponderantenne bzw. können die elektrischen Zuleitungen mittels üblicher Drucktechniken auf ein Substrat des Dokumentes aufgebracht werden. Geeignete Tinten bzw. elektrisch leitende Pigmentpartikel sind beispielsweise metallische Nanopartikel, wie magnetische oder nichtmagnetische Eisenoxydpartikel mit einer spezifischen Oberfläche im Bereich 60 bis 200 m²/g. Beispiel hierfür sind Produkte der Firma NanoChemonics, NM, USA. Weitere Beispiele geeigneter Tinten bzw. Beschichtungsmittel sind die Produkte IJAg-150-Fx oder AG-IJ-G-100-S1 (Silberbasis mit Partikeldurchmesser zwischen 30 und 50 nm), welche mittels Tintenstrahldruck aufbringbar sind. Diese Beschichtungsmittel zeichnen sich zudem dadurch aus, dass eine Leitschicht erst durch einen Aktivierungsschritt, z.B. Laserbestrahlung mit 500 bis 580 nm, im Wege der Sinterung der Partikel entsteht. Die an sich nicht leitfähige Schicht wird mit der Bestrahlung hoch leitfähig. Schließlich sind Siebdruckfarben mit leitfähigen Partikeln der Firmen Dupont (5028 oder 5029) und Spraylat einsetzbar, welche durch Wärmeeinwirkung ihre Leitfähigkeit erhöhen, insbesondere vervielfachen.

Durch den Einsatz von aktivierbaren Beschichtungen wird ein Dokument erst nach Aktivierung einsatzbereit und letztendlich gebrauchsfertig, was die Sicherheit vor Mißbrauch zusätzlich erhöht.

Bei der Transponderschaltung und der Transponderantenne kann es sich beispielsweise um RF- (Radiofrequenz) Transponder (z.B. 13,56 MHz entsprechende ISO 14443 und ISO 15693), Mikrowellentransponder, elekromagnetische Transponder (Niederfrequenzbereich 10 bis 20.000 Hz), oder Oberflächenwellentransponder handeln. Der Datenaustausch mit der Transponderauslesevorrichtung kann in Vollduplexverfahren, Halbduplexverfahren, oder sequenziell erfolgen. Es kann sich um aktive oder passive Transponder handelt. In ersterem Fall umfasst die Transponderschaltung eine eigene Quelle für elektrische Energie. In letzterem Falle wird Energie in die Transponderantenne eingekoppelt, beispielsweise induktiv oder kapazitiv.

In Hinblick auf die Anordnung der Trahsponderantenne relativ zur der Anzeigedruckschicht bestehen die verschiedensten Variationsmöglichkeiten.

Zum Einen können die Transponderantenne und die Anzeigedruckschicht parallel zueinander verlaufend und aufeinander gestapelt oder lateral unmittelbar benachbart angeordnet sein. In ersterem Fall werden die Transponderantenne und die Anzeigedruckschicht nacheinander auf das Substrat des Dokumentes aufgebracht, so dass eine Schichtfolge "Substrat, Transponderantenne, Anzeigedruckschicht" oder "Substrat, Anzeigedruckschicht, Transponderantenne" entsteht. In der zweiten Alternative versteht es sich, dass die Transponderantenne oder das Substrat zumindest in Teilbereichen lichtdurchlässig sein muss. Im Falle der lateral benachbarten Anordnung können Transponderantenne und Anzeigedruckschicht gleichzeitig oder nacheinander auf das Substrat des Dokumentes aufgebracht werden.

Insbesondere im Falle des Einsatzes einer OLED oder einer elektronischen Tinte mit elektrophoretischen Partikelsystemen als Anzeigemittel kann die Transponderantenne aus zwei flächigen Transponderteilantennen gebildet sein, welche parallel zueinander verlaufend und aufeinander gestapelt oder lateral beabstandet benachbart angeordnet sind, wobei die Anzeigedruckschicht zwischen den beiden Transponderteilantennen angeordnet ist.

Bei Stapelung liegt eine Schichtfolge "Substrat, erste Transponderteilantenne, Anzeigedruckschicht, zweite Transponderteilantenne" vor, wobei eine der beiden Transponderteilentenne oder beide der Transponderteilantennen zumindest in Teilbereichen lichtdurchlässig ist bzw. sind. Im Falle der lichtdurchlässigen ersten Transponderteilantenne versteht es sich, dass auch das Substrat zumindest teilweise lichtdurchlässig sein sollte.

Bei lateraler Beabstandung bildet das Substrat eine erste Schicht und in einer hierauf angebrachten zweiten Schicht sind die erste Transponderteilantenne, die Anzeigedruckschicht und die zweite Transponderteilantenne nebeneinander angeordnet.

In allen Fällen werden die beiden Transponderteilantennen bei aktivierter Transponderschaltung so angesteuert, dass zwischen ihnen eine Potentialdifferenz entsteht, welche für die Veränderung der optischen Eigenschaften der Anzeigedruckschicht hinreichend ist.

Alternativ kann eine einzige Transponderantenne vorgesehen sein, wobei die Anzeigedruckschicht parallel hierzu verlaufend und die Transponderantenne und die Anzeigedruckschicht in beliebiger Folge aufeinander gestapelt oder lateral beabstandet benachbart angeordnet sind. Dann kann auf der der Transponderantenne gegenüberliegenden Seite der Anzeigedruckschicht eine Leitschicht, beispielsweise eine ITO Folie (Indium Tin Oxide), angeordnet sein, wodurch wiederum eine Potentialdifferenz an die Anzeigedruckschicht angelegt werden kann. Dann sind die folgenden Schichtfolgen möglich: "Substrat, Leitschicht, Anzeigedruckschicht, Transponderantenne" oder "Substrat, Transponderantenne, Anzeigedruckschicht, Leitschicht", wobei die jeweils zuoberst angeordnete Schicht und/oder das Substrat mit zwischen Substrat und Anzeigedruckschicht liegenden Schichten zumindest in Teilbereichen lichtdurchlässig sein können.

Weiterhin alternativ können im Falle der Ausführung der Transponderantenne als Antennendruckschicht diese Antennendruckschicht und die Anzeigedruckschicht als eine einzige einheitliche Schicht, enthaltend sowohl optisch variable Partikel und als auch elektrisch leitende Partikel, ausgebildet sein. Dann können Transponderantenne und Anzeigedruckschicht in einem einzigen Druckverfahrensschritt auf das Substrat aufgebracht werden.

Die optisch variablen Partikel und/oder die Antennendruckschicht können durch Einstrahlung elektromagnetischer Strahlung, insbesondere Laserstrahlung im IR-, sichtbaren, und/oder UV-Bereich, oder durch Wärmebehandlung, vorzugsweise im Temperaturbereich von 30°C bis 300°C, insbesondere 60°C bis 300°C, vorzugsweise 60°C bis 200°C, aktivierbar sein, wobei die Werte im Wesentlichen von der Glastemperatur des Polymers abhängen und ggf. auch oberhalb von 200°C liegen können. Der Begriff der Aktivierung meint hierbei, dass erst durch einen Aktivierungsverfahrensschritt, wie vorstehend genannt, die optisch variablen Partikel ihre optisch variable Eigenschaft entwickeln bzw. die Antennendruckschicht ihre Antennenfunktionalität (meist Leitfähigkeit) entwickelt.

Im Falle der Ausführungsformen mit Anzeigedruckschicht und/oder Antennendruckschicht werden typischerweise Tinten eingesetzt, die neben den betreffenden Pigmentpartikeln bzw. Partikeln für Tinten übliche Hilfsstoffe, Zusatzstoffe, Lösemittel usw. enthalten. Lösemittel sind beispielsweise: Wasser, aliphatische und aromatische Kohlenwasserstoffe, beispielsweise Toluol oder Xylol, Ester, Ether, Alkohole, organische Säuren und Mischungen solcher Stoffe. Hilfsstoffe sind beispielsweise tintentypische Antischaummittel, Antiabsetzmittel, Viskositätsregler, UV-Stabilisatoren, Penetrationsmittel, Stellmittel, Biozide, Puffersubstanzen, anionische oder kathionische Tenside usw.. Zusatzstoffe können Bindemittelpolymere, Füllstoffe, Pigmente usw. sein.

Als Druckverfahren für die Anzeigedruckschicht und/oder die Antennendruckschicht kommen insbesondere in Frage: Offsetdruck, Siebdruck, Tintenstrahldruck, Rastatiefdruck, (Stahl)Stichtiefdruck, Flexodruck und Gravurdruck. Neben Druckverfahren kann aber auch die Aufbringung von Schichten auf galvanotechnischen Wege, durch Ätzen oder durch Spritztechniken mit Zerstäubung des Beschichtungsmittels eingesetzt werden.

Die Erfindung betrifft des Weiteren ein Verfahren zur Herstellung eines erfindungsgemäßen Sicherheits- und/oder Wertdokumentes, wobei auf ein Substrat des Sicherheits- und/oder Wertdokumentes eine elektronische Transponderschaltung, eine mit der Transponderschaltung elektrisch verbundene Transponderantenne sowie mit der Transponderantenne verbundene Anzeigemittel aufgebracht werden. Anschließend kann, muss aber nicht, eine vorzugsweise im Sichtbaren transparente Schutzschicht aufgebracht werden.

Die Transponderantenne ist vorzugsweise als Antennendruckschicht durch Aufdrucken einer Tinte mit elektrisch leitenden oder halbleitenden Partikeln aufgebracht. Die Anzeigemittel sind vorzugsweise als Anzeigedruckschicht durch Aufdrucken einer Tinte mit optisch variablen Pigmentpartikeln aufgebracht. Die Antennendruckschicht und die Anzeigedruckschicht können nebeneinander oder aufeinander gestapelt auf das Substrat aufgedruckt werden.

Im Rahmen des erfindungsgemäßen Verfahrens gelten alle Ausführungen zum Sicherheits- und/oder Wertdokument analog. Insbesondere können die vorstehend beschriebenen Schichtfolgen durch nacheinander auszuführende Druckverfahrensschritte erzeugt werden. Im Falle lateral liegender Anzeigedruckschicht und Antennendruckschicht können diese gleichzeitig oder nacheinander aufgedruckt werden. Des Weiteren können zwischen verschiedenen Druckverfahrensschritten Fixierungsverfahrens schritte, beispielsweise Trocknungsverfahrensschritte, ggf. mit Wärmebehandlungen im Bereich von 20°C bis 300°C, oder Härtungsverfahrensschritte, ggf. mit Wärmebehandlungen im Bereich von 20°C bis 300°C und/oder UV- oder IR-Bestrahlung, zwischengeschaltet sein.

Im Folgenden wird die Erfindung anhand von lediglich Ausführungsformen darstellenden Beispielen näher erläutert.

### Beispiel 1: Dokument mit einem passiven RF Transponder und einer OLED als Anzeigeschicht

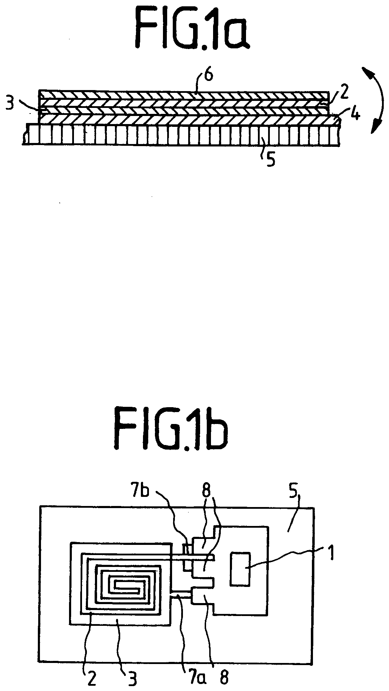

Die Figur 1a stellt einen Schnitt durch einen RF Transponder mit einer OLED als Anzeigemittel dar. Die Figur 1b ist eine Aufsicht auf das fertige Dokument.

Die Herstellung des Dokumentes erfolgt, indem auf ein Substrat 5, welches einen Deckel eines Reisepasses bildet, zunächst unter Verwendung einer Tinte, die Nanopartikel auf Silberbasis enthält, eine Antennenschicht 4 aufgedruckt wird, welche in Aufsicht eine im wesentliche spiralförmige Flachspule mit Kontaktierungsbereichen 7b darstellt. Auf die Antennenschicht 4 wird dann eine Poly-p-phenylenevinylene enthaltende Tinte vollflächig, mit Ausnahme eines Kontaktierungsbereiches 7a der Folie, aufgedruckt. Nachdem die so hergestellte Anzeigedruckschicht 3 fixiert bzw. getrocknet ist, wird hierauf eine leitfähig mit ITO beschichtete (transparente) Folie 2 aufgeklebt. Seitlich benachbart ist ein handelsüblicher Chip mit einer elektronischen Transponderschaltung 1 aufgelegt, wobei Kontakte 8 des Chips in elektrischen Kontakt mit den Kontaktierungsbereichen 7a, 7b kommen. Schließlich wird eine transparente Polymerfolie 6 vollflächig auf das Dokument auflaminiert.

Wird nun die Transponderschaltung 1 durch eine Transponderabfragevorrichtung aktiviert, so sendet die Transponderschaltung 1 über die Antennenschicht 4 ein Signal aus. Dabei tritt zwischen der Leitschicht 2 und der Antennenschicht 4 eine Potentialdifferenz auf, welche die Anzeigedruckschicht 3 zum Erleuchten bringt.

### Beispiel 2: Dokument mit einem passiven RF Transponder und einer elektronischen Tinte als Anzeigeschicht

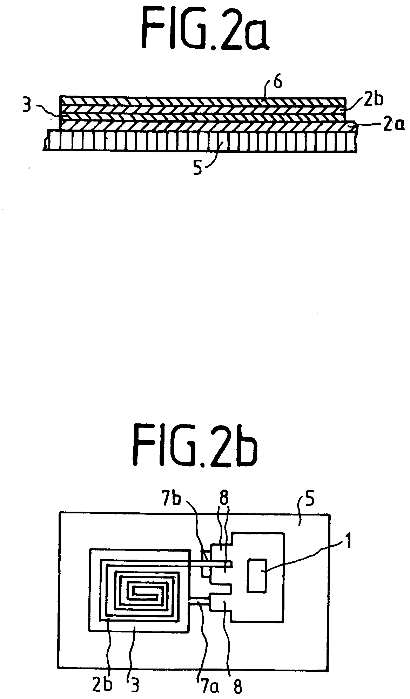

Die Figuren 2a und 2b zeigen eine weitere Ausführungsform in Querschnitt (Fig. 2a) und in Aufsicht (Fig. 2b).

Die Herstellung erfolgt, indem auf ein Substrat 5, welches einen Deckel eines Reisepasses bildet, zunächst eine erste Antennenteilschicht 4a in Form einer im wesentlichen spiralförmigen Flachspule in einem Teilbereich mittels einer Nanopartikel auf Silberbasis enthaltenden Tinte aufgedruckt wird. Auf die Folie wird dann eine elektronische Tinte gemäß der Literaturstelle Jacobson et al. (siehe vorstehend) vollflächig, mit Ausnahme eines Kontaktierungsbereiches 7a der ersten Antennenteilschicht 4a, aufgedruckt. Nachdem die so hergestellte Anzeigedruckschicht 3 fixiert bzw. getrocknet ist, wird hierauf eine zweite Antennenteilschicht 4b unter Verwendung der Tinte mit Nanopartikeln auf Silberbasis aufgedruckt, welche ebenfalls eine im wesentliche spiralförmige Flachspule mit Kontaktierungsbereichen 7b darstellt. Sodann wird seitlich benachbart ein handelsüblicher Chip mit einer elektronischen Transponderschaltung 1 aufgelegt, wobei Kontakte 8 des Chips in elektrischen Kontakt mit den Kontaktierungsbereichen 7a, 7b kommen. Schließlich wird eine transparente Polymerfolie 6 vollflächig auf das Dokument auflaminiert.

Wird nun die Transponderschaltung 1 durch eine Transponderabfragevorrichtung aktiviert, so sendet die Transponderschaltung 1 über die beiden Antennenteilschichten 4a, 4b ein Signal aus. Dabei tritt zwischen der Antennenteilschicht 4a und der Antennenteilschicht 4b eine Potentialdifferenz auf, welche die Anzeigedruckschicht 3 zum Erleuchten bringt.

## Patentansprüche

1. Sicherheits- und/oder Wertdokument mit einer elektronischen Transponderschaltung (1) , wobei die Transponderschaltung (1) mit einer Transponderantenne (4) verbunden ist,
wobei die Transponderantenne (4) mit Mitteln zur Anzeige (3) einer Aktivierung der Transponderantenne (4) aus der Gruppe bestehend aus "elektrooptische Wandler, elektroakustische Wandler und elektromechanische Wandler" verbunden ist, welche ein optisches, akustisches oder mechanisches Signal bei oder nach Aktivierung der Transponderantenne (4) erzeugen,
wobei die Transponderantenne (4) mittels einer Drucktechnologie in oder auf dem Dokument angebracht ist, **gekennzeichnet dadurch, dass** die Transponderantenne als Antennendruckschicht mit elektrisch leitenden Pigmentpartikeln ausgebildet ist, und
wobei der elektrooptische Wandler durch eine Anzeigedruckschicht (3) gebildet ist, oder wobei der elektroakustische Wandler durch einen Piezo-Schallerzeuger gebildet ist, oder wobei der elektromechanische Wandler ein Piezoelement, vorzugsweise eine piezoelektrische Polymerschicht, umfasst, welches mit der Maßgabe angeordnet und ausgebildet ist, dass eine Aktivierung des elektromechanischen Wandlers zur einer Formänderung des Dokumentes oder eines Teilbereiches des Dokumentes führt.

2. Sicherheits- und/oder Wertdokument nach Anspruch 1, wobei die Transponderantenne (4) und die Mittel zur Anzeige (3) einer Aktivierung der Transponderantenne (4) parallel zueinander verlaufend und aufeinander gestapelt oder lateral unmittelbar benachbart auf oder in dem flächigen Dokument angeordnet sind.

3. Sicherheits- und/oder Wertdokument nach einem der Ansprüche 1 oder 2, wobei die Transponderantenne (4) aus
zwei flächigen Transponderteilantennen (2a, 2b) gebildet ist, welche parallel zueinander verlaufend und aufeinander gestapelt angeordnet sind, und wobei die Mittel zur Anzeige (3) einer Aktivierung der Transponderantenne (4) zwischen den beiden Transponderteilantennen (4a, 4b) angeordnet sind.

4. Verfahren zur Herstellung eines Sicherheits- und/oder Wertdokumentes nach einem der Ansprüche 1 bis 3 , wobei auf ein Substrat (5) des Sicherheits- und/oder Wertdokumentes eine elektronische Transponderschaltung (1), eine mit der Transponderschaltung (1) elektrisch verbundene Transponderantenne (4) sowie mit der Transponderantenne (4) verbundene Mittel zur Anzeige (3) einer Aktivierung der Transponderantenne (4) aufgebracht werden, wobei die Transponderantenne (4) als Antennendruckschicht (4) durch Aufdrucken einer Tinte mit elektrisch leitenden oder halbleitenden Partikeln aufgebracht wird, und
wobei die Mittel zur Anzeige (3) einer Aktivierung der Transponderantenne (4) als Anzeigedruckschicht (3) durch Aufdrucken einer Tinte mit optisch variablen Pigmentpartikeln oder -polymeren und/oder durch Aufdrucken einer Schicht mit einem piezoelektrischen Polymer aufgebracht wird.

5. Verfahren nach Anspruch 4 wobei anschließend eine vorzugsweise im Sichtbaren transparente Schutzschicht (6) aufgebracht wird.

6. Verfahren nach einem der Ansprüche 4 oder 5, wobei die Antennendruckschicht (4) und die Anzeigedruckschicht (3) nebeneinander oder aufeinander gestapelt auf das Substrat (5) aufgedruckt werden.

## Claims

1. A security and/or valuable document comprising an electronic transponder circuit (1), the transponder circuit (1) being connected to a transponder antenna (4),
the transponder antenna (4) being connected to means for displaying (3) an activation of the transponder antenna (4) from the group consisting of "electro-optic converter, electro-acoustic converter, and electro-mechanical converter" generating an optic, acoustic, or mechanical signal at or after activation of the transponder antenna (4),
the transponder antenna (4) being attached in or on the document by means of a printing technology, **characterized by** that the transponder antenna is configured as an antenna printing layer with electrically conductive pigment particles, and wherein the electro-optic converter is formed by a display printing layer (3), or wherein the electro-acoustic converter is formed by a piezo sound generator, or wherein the electro-mechanical converter comprises a piezo element, preferably a piezo-electric polymer layer, said piezo element being arranged and adapted such that an activation of the electro-mechanical converter will lead to a change of the shape of the document or of part of the document.

2. The security and/or valuable document according to claim 1, wherein the transponder antenna (4) and the means for displaying (3) an activation of the transponder antenna (4) are arranged in parallel to each other and stacked on each other or are arranged laterally immediately adjacent on or in the sheet-like document.

3. The security and/or valuable document according to one of claims 1 or 2, wherein the transponder antenna (4) is formed of two sheet-like transponder partial antennae (2a, 2b) that are arranged in parallel to each other and stacked on each other, and wherein the means for displaying (3) an activation of the transponder antenna (4) are arranged between the two transponder partial antennae (4a, 4b).

4. A method for making a security and/or valuable document according to one of claims 1 to 3, wherein on a substrate (5) of the security and/or valuable document, an electronic transponder circuit (1), a transponder antenna (4) electrically connected to the transponder circuit (1), and means connected to the transponder antenna (4) for displaying (3) an activation of the transponder antenna (4) are applied, wherein the transponder antenna (4) is applied as an antenna printing layer (4) by imprinting an ink with electrically conductive or semi-conductive particles, and wherein the means for displaying (3) an activation of the transponder antenna (4) are applied as a display printing layer (3) by imprinting an ink with optically variable pigment particles or polymers and/or by imprinting a layer with a piezo-electric polymer.

5. The method according to claim 4, wherein thereafter a protective layer (6) preferably being transparent in the visible range is applied.

6. The method according to one of claims 4 or 5, wherein the antenna printing layer (4) and the display printing layer (3) are imprinted side-by-side or stacked on each other on the substrate (5).

## Revendications

1. Document de sécurité et/ou de valeur comprenant un circuit transpondeur (1) électronique, le circuit transpondeur (1) étant lié à une antenne de transpondeur (4),
l'antenne de transpondeur (4) étant liée à des moyens d'affichage (3) d'une activation de l'antenne de transpondeur (4) à partir du groupe consistant en "convertisseur électro-optique, convertisseur électro-acoustique, et convertisseur électro-mécanique" générant un signal optique, acoustique ou mécanique à ou après l'activation de l'antenne de transpondeur (4),
l'antenne de transpondeur (4) étant montée dans ou sur le document au moyen d'une technologie d'impression,
**caractérisé en ce que** l'antenne de transpondeur est configurée comme couche d'impression à antenne avec des particules de pigment électriquement conductrices, et
dans lequel le convertisseur électro-optique est réalisé par une couche d'impression d'affichage (3), ou dans lequel le convertisseur électro-acoustique est réalisé par un générateur de son piézo-électrique, ou dans lequel le convertisseur électro-mécanique comprend un élément piézo-électrique, de préférence une couche polymérique piézo-électrique, l'élément piézo-électrique étant disposé et configuré de telle façon qu'une activation du convertisseur électro-mécanique mène à une déformation du document ou d'une partie du document.

2. Document de sécurité et/ou de valeur selon la revendication 1, dans lequel l'antenne de transpondeur (4) et les moyens d'affichage (3) d'une activation de l'antenne de transpondeur (4) sont disposés en parallèle l'un à l'autre et empilés l'un sur l'autre ou sont disposés latéralement immédiatement voisins sur ou dans le document plat.

3. Document de sécurité et/ou de valeur selon une des revendications 1 ou 2, dans lequel l'antenne de transpondeur (4) est réalisée de deux antennes partielles de transpondeur (2a, 2b) plates, qui sont disposées en parallèle l'une à l'autre et empilées l'une sur l'autre, et dans lequel les moyens d'affichage (3) d'une activation de l'antenne de transpondeur (4) sont disposés entre les deux antennes partielles de transpondeur (4a, 4b).

4. Procédé de fabrication d'un document de sécurité et/ou de valeur selon une des revendications 1 à 3, dans lequel sur un substrat (5) du document de sécurité et/ou de valeur, un circuit transpondeur (1) électronique, une antenne de transpondeur (4) électriquement liée au circuit transpondeur (1), et des moyens d'affichage (3) d'une activation de l'antenne de transpondeur (4) liés à l'antenne de transpondeur (4) sont appliqués, dans lequel l'antenne de transpondeur (4) est appliquée sous la forme d'une couche d'impression d'antenne (4) par impression d'une encre avec des particules électriquement conductrices ou semi-conductrices, et dans lequel les moyens d'affichage (3) d'une activation de l'antenne de transpondeur (4) sont appliqués sous la forme d'une couche d'impression d'affichage (3) par impression d'une encre avec des particules ou polymères de pigment optique-ment variables et/ou par impression d'une couche avec un polymère piézo-électrique.

5. Procédé selon la revendication 4, dans lequel après une couche protectrice (6) de préférence transparente dans le spectre du visible est appliquée.

6. Procédé selon une des revendications 4 ou 5, dans lequel la couche d'impression d'antenne (4) et la couche d'impression d'affichage (3) sont imprimées l'une à côté de l'autre ou empilées l'une sur l'autre sur le substrat (5).
